(19) Europäisches Patentamt
European Patent Office
Office européen des brevets

(11) Veröffentlichungsnummer : **0 061 106**
**B1**

(12) # EUROPÄISCHE PATENTSCHRIFT

(45) Veröffentlichungstag der Patentschrift : **07.08.85**

(51) Int. Cl.[4] : **C 07 F 9/40**, C 07 F 9/38, C 07 F 9/32, C 07 F 9/30

(21) Anmeldenummer : **82102040.1**

(22) Anmeldetag : **13.03.82**

(54) **Verfahren zur Herstellung von Oligophosphonsäuren bzw. Oligophosphinsäuren, ihren Salzen und/oder Estern sowie neue Phosphonsäurederivate.**

(30) Priorität : **21.03.81 DE 3111152**

(43) Veröffentlichungstag der Anmeldung : **29.09.82 Patentblatt 82/39**

(45) Bekanntmachung des Hinweises auf die Patenterteilung : **07.08.85 Patentblatt 85/32**

(84) Benannte Vertragsstaaten : **AT BE CH DE FR GB IT LI NL SE**

(56) Entgegenhaltungen :
**US-A- 2 651 656**
**US-A- 3 471 552**
**US-A- 3 501 555**
**TETRAHEDRON, Band 26, Nr. 23, Dezember 1970, Seiten 5529-5534, P. TAVS et al.: "Herstellung und KMR-Spektren einiger alpha-beta-ungesättigter phosphonsäureester. Nickelsalzkatalysierte Reaktion von Vinylhalogeniden mit Trialkylphosphiten"**
**JOURNAL OF THE CHEMICAL SOCIETY, Juni 1963, Seiten 3351-3360, B.C. SAUNDERS et al.: "Esters containing phosphorus. Part XVIII. Esters of ethynylphosphonic acid"**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Hägele, Gerhard, Prof. Dr.**
**Klusenstrasse 18**
**D-4010 Hilden (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 061 106 B1

Jouve, 18, rue St-Denis, 75001 Paris, France

**Beschreibung**

Die Herstellung von Alkylphosphonsäuredialkylestern $RP(O)(OR')_2$ durch Umsetzung von Alkylhalogeniden RX mit Dialkylphosphitsalzen $(R'O)_2POMe$ in alkoholischer Lösung R'OH gemäß $RX + (R'O)_2POMe \xrightarrow{R'OH} RP(O)(OR')_2 + MeX$ ist seit der Jahrhundertwende bekannt und wird als « Michaelis-Becker-Reaktion » bezeichnet, vergleiche beispielsweise Houben-Weyl « Methoden der organischen Chemie » 4. Auflage (1963) Band 12, Seiten 446 und folgende. Bevorzugt ist dabei R = n-Alkyl. Die Ausbeuten sinken bei sek.- und tert.-Alkylhalogeniden. X ist vorzugsweise Chlor, kann aber auch Brom oder Jod sein. Für technische Reaktionen ist R' bevorzugt Ethyl oder n'-Butyl, Me ist vorzugsweise Natrium. Es wird weiterhin vorzugsweise in Alkoholen gegebenenfalls aber auch in Äthern oder aromatischen Verbindungen als Lösungsmittel gearbeitet.

Das Prinzip der Michaelis-Becker-Realtop wurde auch auf die Synthese von Oligophosphonsäuren angewandt. Wird beispielsweise Allylbromid $CH_2 = CH - CH_2Br$ eingesetzt tritt zunächst Substitution, dann Addition von Dialkylphosphitnatrium ein. Man erhält letzltlich den Diphosphonsäureester

$$\underset{\substack{|\\P^+}}{CH_3-CH}-CH_2-P^+ \quad (P^+=P(O)(OR')_2).$$

Ähnlich verläuft die Umsetzung von α-Bromstyrol zu

$$\underset{\substack{|\\P^+}}{C_6H_5-CH}-CH_2-P^+.$$

Über erfolgreiche Umsetzungen von polyhalogenierten Olefinen unter den Bedingungen der Michaelis-Becker-Reaktion wird in der Literatur nicht berichtet.

Die US-PS 3 471 552 beschreibt ein Verfahren, bei dem Methanpolyhalogenide, wie Chloroform, Tetrachlorkohlenstoff, Bromoform, Kohlenstofftetrabromid mit Dialkylphosphit-Natrium unter Verwendung eines Gemisches aus Xylol und Tetrahydrofuran als Lösungsmittel umgesetzt werden. Es sollen dabei Methanoligophosphonsäureester entstehen. Die Überprüfung dieser Angaben zeigt jedoch, daß die Umsetzungen nicht so glatt verlaufen wie behauptet. Nebenreaktionen der geplanten Umsetzungen dominieren, wie durch Kernresonanzspektren gezeigt werden kann. Eigene Untersuchungen haben gezeigt, daß insbesondere die Reaktionen des Chloroforms und des Tetrachlorkohlenstoffs zweifelsfrei unzutreffend beschrieben sind.

Versucht man die polyhalogenierten Olefine Vinylidenchlorid ($CH_2 = CCl_2$), Trichlorethylen ($CHCl = CCl_2$) und Tetrachlorethylen ($CCl_2 = CCl_2$) mit Diethylphosphitnatrium in Ethanol umzusetzen, so zeigt sich das Folgende : Im Falle des Vinylidenchlorids und Trichlorethylens beobachtet man kaum eine Umsetzung, Tetrachlorethylen setzt sich quantitativ zum Triethylphosphat um. Polyphosphonsäureverbindungen entstehen nicht.

Die Erfindung geht von der Aufgabe aus, ein neues, wirkungsvolles und allgemein anwendbares Verfahren zur Herstellung von Polyphosphonsäuren und verwandten Verbindungen zu schaffe, mit dem bekannte und insbesondere neue Verbindungen technisch zugänglich werden. Die erfindungsgemäße Lösung dieser technischen Aufgabe geht von der überraschenden Feststellung aus, daß die Auswahl bestimmter Reaktanten, insbesondere die Auswahl bestimmter organischer Polyhalogenidverbindungen, in dem im folgenden geschilderten Reaktionssystem zum angestrebten Ziel führt.

Gegenstand der Erfindung ist dementsprechend in einer ersten Ausführungsform ein neues Verfahren zur Herstellung von Oligophosphonsäuren beziehungsweise Oligophosphinsäuren, ihren Salzen und/oder ihren Estern durch Umsetzung von organischen Halogen-Verbindungen mit Diestern der Phosphorigen Säure beziehungsweise mit Estern von Alkyl-beziehungsweise Arylphosphonigen Säuren. Das neue Verfahren ist dadurch gekennzeichnet, daß man

a) Olefinpolyhalogenide mit endständiger Doppelbindung und der allgemeinen Formel

$$\begin{matrix} R_1 \\ \\ R_2 \end{matrix} \quad C = C\ (\text{Halogen})_2 \qquad (I)$$

in der $R_1$ und $R_2$ gleich oder verschieden sind und Wasserstoff, Halogen oder einen Kohlenwasserstoffrest bedeuten, wobei der Kohlenwasserstoffrest gesättigt, ungesättigt oder aromatisch und dabei geradkettig, verzweigt oder ringförmig ist, eine C-Zahl bis 25, insbesondere bis 20 aufweist, gegebenenfalls auch substituiert sein kann, und Halogen Chlor und/oder Brom bedeuten,

b) mit Alkalimetallsalzen von Diestern der Phosphorigen Säure beziehungsweise von Estern Alkylbeziehungsweise Arylphosphoniger Säuren

c) unter Austausch doppelbindungsständigen Halogens und gleichzeitiger Sättigung der Doppelbindung umsetzt,

d) wobei man in Gegenwart von unter Reaktionsbedingungen flüssigen, cyclischen oder nichtcyclischen Ethern oder tertiären Aminverbindungen als Lösungsmittel arbeitet und

e) die gebildeten Umsetzungsprodukte gewünschtenfalls zu den freien Phosphon- beziehungsweise Phosphinsäuren oder ihren Salzen verseift.

Die Umsetzung der Reaktanten erfolgt erfindungsgemäß in Gegenwart ausgewählter Lösungsmitel. Ein ganz besonders bevorzugtes Lösungsmittel im Sinne der Erfindung ist das Tetrahydrofuran, das insbesondere niedrigviskose Lösungen auch bei vergleichsweise hohen Gehalten an Reaktanten, insbesondere bei hohen Gehalten der phosphorhaltigen Estersalze liefert. Ein weiteres sehr brauchbares Ether-Lösungsmittel ist Methyl-tert.-butylether. Aber auch andere cyclische oder nicht-cyclische Ether, beispielsweise Dioxan oder Polyglyme, können Verwendung finden. Eine geeignete cyclische tertiäre Base ist beispielsweise Pyridin. Aber auch hirt können — wie im Fall der Ether — offenkettige tertiäre Basen Verwendung finden, sofern sie unter den Reaktionsbedingungen flüssig sind und dementsprechend als Lösungsmittel beziehungsweise Reaktionsmedium dienen können.

Es hat sich gezeigt, daß in Gegenwart dieser Medien das Phosphitanion nicht nur als halogenabstrahierende Base dient, sondern daß hier das Phosphitanion direkt Halogen zu substituieren und P-C-Bindungen zu knüpfen vermag.

Darüber hinaus addiert sich das Phosphitanion an die ungesättigten Systeme. Auf diese Weise werden Oligophosphonsäureester beziehungsweise die entsprechenden Säuren in praktisch einstufiger Verfahrensführung zugänglich. Vergleichbare Reaktionsmechanismen führen beim Einsatz von Alkalimetallsalzen von (Mono-)Estern von Alkyl- beziehungsweise Arylphosphonigen Säuren zu Oligophosphinsäuren beziehungsweise ihren Estern oder Salzen. Die Klasse der organischen Alkyl-beziehungsweise Arylphosphinylverbindungen (Phosphinsäuren) ist an sich bekannt und beispielsweise beschrieben anhand der Alkan-1,1-bis-(alkylphosphinylverbindungen) in « Z. anorg. allg. Chemie » Band 399, 1 bis 6 (1973). Dargestellt ist hier beispielsweise die Herstellung von 1-Hydroxyalkan-1,1-bis-(alkylphosphinsäuren) als strukturanaloge Verbindungen zu den 1-Hydroxyalkan-1,1-diphosphonsäuren. Die nachfolgende Erfindungsschilderung stützt sich überwiegend auf die Darstellung der Oligophosphonsäureverbindungen beziehungsweise ihre Herstellung, ist jedoch analog auch zu verstehen für die entsprechenden Oligophosphinsäuren und ihre Derivate, soweit nicht ausdrücklich Unterschiedliches ausgesagt wird.

Die erfindungsgemäß als Ausgangsmaterial eingesetzten Olefinpolyhalogenide entsprechen der zuvor angegebenen allgemeinen Formel (I). Charakteristich ist für sie die endständige Doppelbindung und die Perhalogenierung am endständigen Kohlenstoffatom. Diese Doppelbindung des Einsatzmaterials verschwindet in der erfindungsgemäßen Reaktion zugunsten einer gesättigten C-C-Bindung an dieser Stelle des Moleküls.

Die Substitution des zweiten an der Doppelbindung beteiligten C-Atoms läßt im erfindungsgemäßen Verfahren eine breite Variation zu. Die Reste $R_1$ und $R_2$, die gleich oder verschieden sein können, sind Wasserstoff, Halogen, d. h. Chlor und/oder Brom oder Kohlenwasserstoffreste, wobei dieser letzte Begriff die im folgenden geschilderte breite Bedeutung hat. Charakteristische Stoffe beziehungsweise Stoffklassen für dieses Ausgangsmaterial sind damit die folgenden Fälle : $R_1$ und $R_2$ bedeuten Wasserstoff (Vinylidenhalogenid), einer der Reste bedeutet Wasserstoff, der andere bedeutet Halogen (Trihalogenethylen), beide Reste bedeuten Halogen (Tetrahalogenethylen), einer der Reste ist ein Kohlenwasserstoffrest, der andere Rest ist entweder Wasserstoff oder Halogen, beide Reste sind gleiche oder verschiedene Kohlenwasserstoffreste. Wie noch gezeigt werden wird, hat unter anderem die jeweilige Wahl des bestimmten Ausgangsmaterials Einfluß auf die Konstitution der entstehenden Oligophosphonbeziehungsweise -phosphinsäuren.

Grundsätzlich können Olefinpolyhalogenide mit Chlor und/oder Brom als Halogene zum Einsatz kommen, wobei die jeweils im Einsatzmaterial vorliegenden speziellen Halogenatome gleich oder verschieden sein können.

Ausschließlich chlorierte Einsatzmaterialien können insbesondere für die technische Auswertung besondere Bedeutung haben, Bedeutungsvoll kann die Auswahl der jeweiligen Halogensubstitution für die Wahl der sonstigen Reaktionsbedingungen sein. Es gelten hier im allgemeinen die folgenden Gesetzmäßigkeiten : Die Reaktivität des Olefinhalogenids nimmt in der Reihe $Cl < Br$ zu. Außerdem erhöht sich die Aktivität des Olefinhalogenids mit zunehmender Zahl von Halogenatomen im Ausgangsmaterial. In Abstimmung mit anderen im folgenden noch zu schildernden Verfahrensvariablen können damit von Fall zu Fall optimale Umsetzungsbedingungen gewählt werden.

Bedeuten $R_1$ und/oder $R_2$ einen Kohlenwasserstoffrest, dann ist erfindungsgemäß dieser Begriff breit zu verstehen. Unter ihn fallen praktisch beliebige gesättigte, ungesättigte oder aromatische Kohlenwasserstoffreste, die geradkettig, verzweigt oder ringförmig sein können, sofern nicht aus sterischen Gründen Einschränkungen beziehungsweise Bedenken bestehen. Die Kohlenstoffzahl dieser Reste liegt pro Rest nicht über 25 und vorzugsweise nicht über 20. Vergleichsweise kürzere Kohlenwasserstoffreste können bevorzugt sein, so können beispielsweise bis zu 10 oder auch nur bis zu 6 Kohlenstoffatome in solchen Resten $R_1$ beziehungsweise $R_2$ vorliegen. Die bestimmte Auswahl der Reste $R_1$ und $R_2$ im jeweiligen Ausgangsmaterial wird durch die gewünschte Struktur der zu bildenden Oligophosphon — beziehungsweise — Phosphin-säuren bestimmt.

Liegen in $R_1$ und/oder $R_2$ Kohlenwasserstoffreste im angegebenen Sinne vor, dann können diese

Reste auch ihrerseits substituiert sein, beziehungsweise funktionelle Gruppen tragen, sofern die Substituenten beziehungsweise funktionellen Gruppen nicht ihrerseits in unerwünschter Weise mit den anderen Reaktanten der erfindungsgemäßen Reaktion in Wechselwirkung treten können. Im einzelnen gilt hier das einschlägige Wissen des Standes der Technik. Im Rahmen der Erfindung kann es allerdings durchaus erwünscht sein, daß gerade auch mit solchen Substituenten beziehungsweise reaktiven Gruppen an den Resten $R_1$ und/oder $R_2$ unter den erfindungsgemäß eingesetzten Verfahrensbedingungen Umsetzungen mit den Alkalimetallsalzen von Diestern der phosphorigen Säure beziehungsweise entsprechenden Salzen von Estern Alkyl- beziehungsweise Arylphosphoniger Säuren stattfinden. So kann beispielsweise durch geeignete Halogensubstitution der Reste $R_1$ und/oder $R_2$ die Möglichkeit vorgesehen werden, daß die Einführung von Phosphonsäure- beziehungsweise Phosphinsäuregruppen auch an weiteren Stellen des eingesetzten Moleküls stattfindet. In einem erfindungsgemäß wichtigen Sonderfall trägt wenigstens einer der Reste $R_1$ beziehungsweise $R_2$ eine endständige Doppelbindung, die wenigstens in ihrem endständigen Kohlenstoffatom halogeniert ist. Es liegt hier also eine Ausgangsverbindung vor, die die in der allgemeinen Formel I dargestellte reaktive Gruppe wenigstens zweimal aufweist. Ein charakteristischer Fall hierfür sind halogenierte Butadienderivate, insbesondere perhalogeniertes Butadien oder entsprechende Isoprenderivate Allgemein können wenigstens endständig perhalogenierte $\alpha,\omega$-Diolefine dieser Bedingung für erfindungsgemäße Ausgangsmaterialien genügen. Es leuchtet ein, daß damit eine Vielzahl neuer Polyphosphonsäure- beziehungsweise Polyphosphinsäure-Verbindungen zugänglich wird, die für zahlreiche Anwendungszwecke interessante Eigenschaften aufweisen.

Die bestimmte Konstitution des eingesetzten Olefinpolyhalogenids beeinflußt letztlich die maximal einzuführende Anzahl von Phosphonsäure- beziehungsweise Phosphinsäure-Gruppen. Im Endprodukt liegen pro Reaktionseinheit gemäß der Darstellung aus der allgemeinen Formel I wenigstens 2, im allgemeinen jedoch 3 oder 4 Phosphonbeziehungsweise Phosphinsäuregruppen vor. Vinylidenchlorid liefert beispielsweise die 1,1,2-Ethantrisphosphonsäure, Tetrachlorethylen liefert die neue 1,1,2,2-Ethantetrakisphosphonsäure. Trichlorethylen kann — je nach Wahl der Reaktionsbedingungen — die 1,1,2-Trissäure oder die 1,1,2,2-Tetrakissäure liefern. Ausgangsverbindungen der allgemeinen Formel I, in denen einer der Reste $R_1$ beziehungsweise $R_2$ einen Kohlenwasserstoffrest bedeutet, führen in der Regel zu Trisphosphonsäure-Produkten.

Die jeweilige Struktur der eingesetzten Olefinhalogenide der allgemeinen Formel I kann auch Einfluß auf die Reaktivität der erfindungsgemäßen Umsetzung haben. Am reaktionsträgsten sind in der Regel die mit 2 Kohlenwasserstoffresten substituierten Ausgangsverbindungen der allgemeinen Formel I. Es folgen die entsprechenden Verbindungen mit nur einem Kohlenwasserstoffrest, dann nimmt die Reaktivität mit zunehmendem Halogengehalt also beispielsweise in Richtung Vinylidenchlorid < Trichlorethylen < Tetrachlorethylen zu.

Zur Einführung von Phosphonsäuregruppen werden zusammen mit den Olefinpolyhalogeniden die Ester der Phosphorigen Säure eingesetzt. Zweckmäßigerweise verwendet man diese Reaktanten in Form ihrer Alkalimetallsalze. Das wichtigste Alkalimetallsalz ist das Natriumsalz. Formelmäßig lassen sich die Verbindungen darstellen als

$$(R'O)_2POMe,$$

worin Me ein Alkalimetall, insbesondere Natrium und R' einen Kohlenwasserstoffrest, insbesondere einen geradkettigen oder verzweigten Alkylrest bedeutet. tert.-Alkylreste sind im allgemeinen allerdings unerwünscht. Die Alkylreste R' können bis zu 25 C-Atome, insbesondere bis 20 C-Atome, enthalten. Es kann bevorzugt sein, mit niedriger-gliedrigen Alkylresten zu arbeiten, beispielsweise mit solchen bis zu 12 insbesondere mit bis zu 8 C-Atomen.

Die Auswahl der jeweiligen Alkylreste — beziehungsweise damit der bestimmten Estergruppierungen in den Dialkylphosphitsalzen hat unter anderem Einfluß wiederum auf die Reaktivität des Systems. Die reaktivsten Phosphitester sind die niedrigen Alkylester mit insbesondere $C_2$ bis $C_5$ im jeweiligen Alkylrest. Natrium-Diethylphosphit beziehungsweise der entsprechenden n-Butylverbindung können insbesondere dann Bedeutung zukommen, wenn letztlich nicht Polyphosphonsäureester sondern die freien Polyphosphonsäuren beziehungsweise ihre Salze gefordert werden. Wird nach der Einführung der Phosphonsäureestergruppierungen in die Verbindungen der allgemeinen Formel I zur freien Polyphosphonsäure verseift, dann ist im jetzt anfallenden Verseifungsprodukt die ursprüngliche Beschaffenheit der esterbildenden Alkoholkomponente ja unerheblich geworden. Wird allerdings der Erhalt der Estergruppierung gefordert, dann ist zu berücksichtigen, daß beispielsweise die Isopropylester schwächer reaktiv sind, als die Ethylester, jedoch noch reaktiver als beispielsweise Isooctylester.

Das zur Durchführung des erfindungsgemäßen Verfahrens erforderliche Dialkylphosphit-Salz kann in an sich bekannter Weise beispielsweise durch Reaktion von Natriumhydrid mit dem entsprechenden Dialkylphosphit gewonnen werden, wobei man die Einwirkung von Luftsauerstoff und insbesondere von Feuchtigkeit durch die Verwendung eines inerten Schutzgases, beispielsweise trockenen Stickstoff, ausschließt. Als Dialkylphosphite kommen erfindungsgemäß insbesondere Phosphorigsäure-dialkylester mit 1 bis 8 Kohlenstoffatomen im geradkettigen oder verzweigten Alkylrest in Frage.

Anstelle der Dialkylphosphite können entsprechende Salze von Estern Alkyl- beziehungsweise Arylphosphoniger Säuren eingesetzt werden. Diese Reaktanten sind formelmäßig darzustellen gemäß

R'O — P(R) — OMe.

In dieser Formel haben R' und Me die für die Dialkylphosphite angegebene Bedeutung. Me ist also insbesondere Natrium und R' ein geradkettiger oder verzweigter Alkylrest mit vorzugsweise 1 bis 8 Kohlenstoffatomen. R kann Alkyl oder Aryl sein. Als Aryl kommt insbesondere der Phenylrest in Betracht, bei Alkylresten sind niedrige Alkylreste mit insbesondere 1 bis 5, vorzugsweise 1 bis 3 C-Atomen wichtig.

Auch die Herstellung solcher Alkyl- beziehungsweise Arylphosphonigen Säuren kann in an sich bekannter Weise erfolgen, verwiesen wird auf die bereits zitierte Literaturstelle Z. anorg. allg. Chemie, Band 399, Seiten 1-6 sowie die DE-A1-21 53 998 und DE-A1-21 53 999. Für die Phosphor enthaltenden Reaktanten beider hier geschilderten Gruppen gilt, daß bevorzugt jeweils eine frische Lösung des entsprechenden Salzes zubereitet und unmittelbar anschließend in die nachfolgende Umsetzung eingegeben wird.

Ein weiterer wichtiger Bestandteil des erfindungsgemäßen Verfahrens ist die Mitverwendung der eingangs erwähnten unter Reaktionsbedingungen flüssigen Reaktionshilfsmittel, das heißt der cyclischen oder offenkettigen Ehter beziehungsweise der entsprechenden tertiären Stickstoffbasen. Tetrahydrofuran oder Methyl-tert.-butylether sind besonders zweckmäßige Lösungsmittel im Sinne der Erfindung. Mit Tetrahydrofuran können leicht bewegliche niedrig viskose Lösungen der phosphorhaltigen Estersalze hergestellt werden. Die Gegenwart des Tetrahydrofuran beziehungsweise der anderen genannten Lösungsmittel führt zur gewünschten Ausbildung der P-C-Bindung, während Parallelversuche mit einer Vielzahl anderer Lösungsmittel dieses Ergebnis nicht gezeigt haben.

Im einzelnen kann es zweckmäßig sein, beide Reaktanten zum Beispiel in Tetrahydrofuran gelöst in die Reaktion einzusetzen. So kann beispielsweise die Herstellung der Dialkylphosphitsalze unmittelbar in Tetrahydrofuran erfolgen.

Bei der erfindungsgemäßen Umsetzung werden die Reaktanten vorzugsweise in solchen Mengenverhältnissen eingesetzt, daß alle doppelbindungsständigen Halogenatome gemäß der allgemeinen Formel I gegen Phosphonsäure- beziehungsweise Phosphinsäureestergruppen ausgetauscht werden können. Es ist dabei im einzelnen weiterhin bevorzugt, daß man die phosphorhaltigen Ester- beziehungsweise Diester-Alkalimetallsalze im Überschuß über die zum bloßen Austausch des Halogens gegen Phosphon- beziehungsweise Phosphinsäuregruppen stöchiometrisch benötigte Menge einsetzt. Bevorzugt wird mit einem Überschuß von wenigstens 1 Mol Alkalimetallsalz pro Mol Olefinpolyhalogenid gearbeitet, wobei sich dieser « Überschuß » aus dem rechnerischen Vergleich der Anzahl von doppelbindungsständigen Halogenatomen einerseits und Alkalimetallatomen andererseits ergibt. Ein Überschuß von 1 Mol Alkalimetallsalz pro Mol Olefinhalogenid kann besonders zweckmäßig sein.

Anlaß für dieses Arbeiten mit dem Überschuß der phosphorhaltigen Reaktionskomponente ist, daß offenbar der Reaktionsablauf der erfindungsgemäßen Umsetzung in der Regel nicht auf eine einfache Substitution im Sinne der Michaelis-Becker-Reaktion beschränkt ist. Unter dem Einfluß der phosphorhaltigen Reaktanten findet vielmehr intermediär — je nach Ausgangsverbindung und gegebenenfalls Verfahrensbedingungen — eine Abspaltung von Halogenwasserstoff (HCl) beziehungsweise Halogen ($Cl_2$) statt. Die so gebildete acetylenische Bindung greift in das Reaktionsgeschehen ein. Am Beispiel des Vinylidenchlorids, des Trichlorethylens und des Tetrachlorethylens kann der Reaktionsablauf summarisch wie folgt dargestellt werden : (auch hier gilt $P^+ = P(O)(OR')_2$)

Vinylidenchlorid

$$CH_2 = CCl_2 + 3\ (R'O)_2PONa + H_2O \longrightarrow$$

$$CH_2P^+ - CHP_2^+ + 2\ NaCl + NaOH$$

Tetrachlorethylen

$$CCl_2 = CCl_2 + 5\ (R'O)_2PONa + H_2O \longrightarrow$$

$$CHP_2^+ - CHP_2^+ + 4\ NaCl + (C_2H_5O)_2P(O)ONa$$

Die Reaktionen des Trichlorethylens können — wie noch geschildert wird — in zwei Richtungen gelenkt werden :

(a) $CHCl = CCl_2 + 4(R'O)_2PONa + H_2O \longrightarrow$

$CHP_2^+ - CHP_2^+ + 3NACl + NaOH$

(b) $CHCl = CCl_2 + 4(R'O)_2PONa + H_2O \longrightarrow$

$CH_2P^+ - CHP_2^+ + (R'O)_2P(O)ONa + 3NaCl$

Im Fall (a) tritt vermutlich intermediär eine Abspaltung von HCl auf, im Fall (b) dürfte intermediär die $Cl_2$ Abspaltung stattfinden.

Eine Steuerung des Reaktionsablaufes in Richtung (a) beziehungsweise (b) gelingt im dargestellten Fall wie folgt : Zunächst kann hier die Wahl der Zugaberichtung von entscheidender Bedeutung sein. Wird der phosphorhaltige Reaktant, also beispielsweise das Dialkylphosphitsalz, vorgelegt und Trichlorethylen zugegeben, dann wird die Bildung der Ethantriphosphonsäure begünstigt. Wird andererseits das Trichlorethylen vorgelegt und der phosphorhaltige Reaktant, also beispielsweise das Dialkylphosphitsalz, dieser Vorlage zugegeben, dann wird die Bildung der Ethantetrakisphosphonsäure begünstigt. Andererseits gilt aber auch, daß die Beschaffenheit der Alkoxyreste in den phosphorhaltigen Reaktanten, also beispielsweise die zwei Alkoxyreste im Dialkylphosphit, die jeweilige Richtung des Reaktionsablaufs mitbestimmt. Sterisch gehemmte Alkoxyreste, beispielsweise also Isooctyl — beziehungsweise Isopropylreste, führen die Reaktion in Richtung auf Tetrakissäuren, nicht sterisch gehemmte Reste, insbesondere der Ethoxyrest, steuern die Reaktion in Richtung auf Trissäuren. Ist der Reaktionsablauf vorbestimmt, wie im Falle des Vinylidenchlorids, (zur Trissäure) beziehungsweise im Fall des Tetrachlorethylens (zur Tetrakissäure) dann scheidet eine Beeinflussung der Reaktion durch diese Maßnahmen aus.

Zu den sonstigen Verfahrensbedingungen gilt im einzelnen :

Die Menge des Tetrahydrofurans ist nicht kritisch soweit die hinreichende Mischbarkeit der Reaktanten sichergestellt ist. Insbesondere ist es bevorzugt, niedrig viskose Phosphitlösungen in das Verfahren einzusetzen. Die Reaktionstemperatur liegt üblicherweise im Bereich von – 20 °C bis 100 °C, häufig vorzugsweise im Bereich von 0 bis 80 °C. Werden Reaktanten-Paare eingesetzt, die hoch reaktiv miteinander sind, so kann es zweckmäßig sein, die Reaktion wenigstens anfänglich zu kühlen und gegebenenfalls auch bei noch tieferen Temperaturen — beispielsweise bei – 70 °C — mit der Reaktion zu beginnen. Anfänglich gekühlt wird beispielsweise bei der Umsetzung von Tetrachlorethylen mit Diethyl- oder auch noch Diisopropylphosphiten. Werden dagegen reaktionsträge Reaktantenpaare eingesetzt — beispielsweise die Kombination von Vinylidenchlorid mit Diisooctylphosphit — kann ein Erwärmen der Reaktionsmischung von Anfang an notwendig sein.

Die Reaktionskomponenten — beide gelöst in trockenem THF — werden in der Regel langsam unter Rühren miteinander vereinigt, wobei man das gebildete Reaktionsgemisch kühlt oder erwärmt. Gegebenenfalls läßt man unter Rühren oder unter Kochen am Rückfluß hinreichend nachreagieren. Der Verlauf der Reaktion kann im Hinblick auf die Bildung des erwünschten Reaktionsproduktes durch $^{31}P$-NMR-spektroskopische Überprüfung verfolgt werden.

Wenigstens anfänglich wird unter Ausschluß von Feuchtigkeit und Inertgas gearbeitet. In einzelnen Fällen hat sich jedoch gezeigt, daß man nach vollständiger Vereinigung der Reaktionskomponenten und vollendeter Primärreaktion dem Reaktionsgemisch Wasser zusetzen kann, um damit den endgültigen Ablauf der Reaktion noch zu begünstigen. Der Zusatz von Wasser kann insbesondere auch eine zu heftige Nachreaktion dämpfen.

Zweckmäßig dann der Wasserzusatz etwa bei der Vervollständigung der Reaktion zwischen Diethylphosphitnatrium und Tetrachlorethylen sein. Wird Wasser im Reaktionsgemisch zugesetzt, so beträgt die Menge vorzugsweise 1 bis 2 Mol Wasser pro Mol Olefin.

Beim Arbeiten mit hochflüchtigen Komponenten, beispielsweise Vinylidenchlorid, kann es zweckmäßig sein, in geschlossenen Reaktionsgefäßen zu arbeiten, wobei üblicherweise unter Eingendruck bei Reaktionstemperatur gearbeitet werden kann.

Die Aufarbeitung des primär angefallenen Reaktionsgemisches kann wie folgt vorgenommen werden : Das Reaktionsgemisch wird neutralisiert, d. h. vorzugsweise auf einen pH-Wert im Bereich von etwa 7 eingestellt. Hierzu kann beispielsweise eine Carbonsäure, insbesondere Essigsäure, eingesetzt werden. Geeignet ist beispielsweise eine Lösung von Eisessig in THF (1 : 1). Nachfolgend wird — gegebenenfalls nach Einengen des Reaktionsgemisches — das gebildete Natriumchlorid in üblicher Weise entfernt, beispielsweise durch Auswaschen mit Wasser, Filtrieren und/oder Zentrifugieren.

Die angefallenen Oligophosphonsäureester bzw. Oligophosphinsäureester können als solche isoliert und gereinigt werden. Häufig sind jedoch nicht die Ester sondern die freien Säuren bzw. ihre Salze, insbesondere ihre wasserlöslichen Salze, das gewünschte Reaktionsprodukt. Hierzu kann die Verseifung der Ester in bekannter Weise durch saure Hydrolyse, z. B. durch Erhitzen mit wäßrigen Mineralsäuren wie Salzsäure oder Bromwasserstoffsäure, oder auch durch Pyrolyse erfolgen. Die freien Säuren lassen sich durch partielle oder vollständige Neutralisation mit anorganischen oder organischen Basen in ihre Salze überführen.

Polyphosphonsäuren sind bekanntlich ausgezeichnete Sequestrierungsmittel für mehrwertige Metallionen und insbesondere als Komplexbildner für Erdalkalimetallionen geeignet. Üblicherweise zeigen sie einen charakteristischen Thresholdeffekt. Ihre praktische Verwendung erfolgt sowohl im technischen wie im kosmetischen und/oder pharmazeutischen Bereich. Durch die Erfindung werden zahlreiche neue Polyphosphonsäureverbindungen zugänglich, die interessante Verwendungsmöglichkeiten besitzen. Oligophospphinsäuren können beispielsweise als Mittel mit flammhemmender Wirkung oder zur Papierimprägnierung eingesetzt werden. Auch hier erschließen sich durch das erfindungsgemäße Verfahren Erweiterungsmöglichkeiten.

Gegenstand der Erfindung sind weiterhin die neuen nach dem erfindungsgemäßen Verfahren zugänglichen Oligophosponsäurederivate. Eine besonders wichtige neue Oligophosphonsäureverbindung ist die 1,1,2,2-Ethan-tetrakisphosphonsäure der allgemeinen Formel II

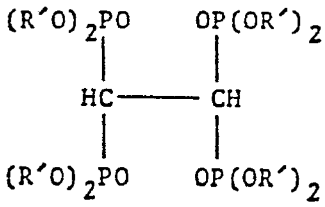

(II)

in der R' die Bedeutung von Wasserstoff hat. In den Rahmen der Erfindung fallen die Ester und Salze dieser neuen Verbindung, wobei im Falle der Ester R' die zuvor angegebene Bedeutung hat und insbesondere einen Alkylrest mit 1 bis 8 C-Atomen darstellt, während im Fall der Salze wasserlösliche Salze und hier insbesondere die Alkalimetallsalze besonders bevorzugt sind.

Beispiel 1

1,1,2-Ethantrisphosphonsäurehexaethylester aus Vinylidenchlorid

Apparatur : 4 Liter Dreihalskolben, KPG-Rührer, Rückflußkühler, Tropftrichter, Stickstoffschutzgas.

Zu einer Suspension von 120 g Natriumhydridpaste (MERCK, 80 % NaH in Paraffinöl) (4 Mol) in 1 000 ml trockenem Tetrahydrofuran tropft man innerhalb von 4,5 Stunden eine Lösung von 552 g (4 Mol) Diethylphosphit 400 ml abs. THF. Nachdem die Wasserstoffentwicklung beendet ist, erwärmt man 1 Stunde lang zum Rückfluß, wobei eine klare Lösung von Diethylphosphitnatrium resultiert. Hierzu tropft man bei Rückflußtemperatur innerhalb von 3 Stunden eine Lösung von 192 g (2 Mol) Vinylidenchlorid in 100 ml abs. THF.

Der Ansatz wird weitere 2,5 Tage zu Rückfluß erwärmt, wobei wegen des niedrigen Siedepunktes von $CH_2 = CCl_2$ für intensive Kühlung des Rückflußkühlers zu sorgen ist ! Nach Abkühlen stellt man durch Zugabe von Eisessig/THF (1 : 1) auf einen pH-Wert von 7 ein und engt den gesamten Ansatz am Rotationsverdampfer ein. Der Rückstand wird in 1 200 ml Methylenchlorid aufgenommen und mit 1 100 ml Wasser ausgewaschen. Die abgetrennte Wasserphase wird erneut mit Methylenchlorid extrahiert. Die vereinigten Methylenchloridphasen werden über Natriumsulfat getrocknet und dann am Rotationsverdampfer eingeengt. Durch Ausschütteln des Rückstandes mit Ligroin 30-50 entfernt man aus dem Rohestergemisch das Paraffinöl der eingangs verwendeten Natriumhydridpaste. Wiederholte Destillation mit einer Dünnschichtverdampferanlage Leybold-Heraeus KDL-1 liefert den farblosen 1,1,2-Ethantrisphosphonsäurehexaethylester vom Kp 194-196° bei 0,67 mbar. Ausbeute : 400 g, 68,5 %. ($^{31}P\{^1H\}$NMR zeigt : Primär-Ausbeute beträgt über 90 %.)

Beispiel 2

1,1,2-Ethantrisphosphonsäure

109 g (0,25 Mol) 1,1,2-Ethantrisphosphonsäurehexaethylester werden mit 500 ml 48 % HBr 4 Stunden lang zum Rückfluß erwärmt. Nach Abziehen der überschüssigen Bromwasserstoffsäure am Rotationsverdampfer verbleibt ein zähes Öl, aus dem durch mehrtägiges Kühlen (Kühlschrank) die kristalline Säure abgeschieden wird. Ausbeute : praktisch quantitativ.

Analog verläuft eine Esterspaltung mit 36 % HCl.

Beispiel 3

1,1,2-Ethantriphosphonsäurehexaethylester aus Trichlorethylen

Apparatur : 2 Liter Dreihalskolben, KPG-Rührer, Tropftrichter, Rückflußkühler, Stickstoffschutzgas.

Zu einer Suspension von 60 g Natriumhydridpaste (MERCK, 85 % NaH in Paraffinöl (2 Mol) in 500 ml trockenem Tetrahydrofuran tropft man bei Raumtemperatur eine Lösung aus 276 g (2 Mol) Diethylphosphit in 500 ml abs. THF. Nach beendeter Wasserstoffentwicklung erwärmt man eine Stunde lang zum Rückfluß, wobei eine klare Lösung von Diethylphosphitnatrium entsteht.

Bei Raumtemperatur tropft man hierzu eine Lösung von 131 g (1 Mol) Trichlorethylen in 100 ml abs. THF innerhalb von 1 Stunde zu und rührt 1 Stunde lang nach. Nach Stehen über Nacht stellt man mit Eisessig/THF (1 : 1) auf pH 7 ein und engt anschließend den gesamten Ansatz am Rotationsverdampfer ein. Nach Aufnehmen in 500 ml Toluol wäscht man das entstandene NaCl durch Wasser aus, separiert und trocknet die Toluolphase mit Natriumsulfat. Nach Einengen am Rotationsverdampfer destilliert man mit einer Dünnschichtverdampferanlage Leybold-Heraeus KDL-1 und erhält 73 g Rohester/Paraffinöl-Gemisch. Durch Ausschütteln mit Ligroin 30-50 entfernt man das Paraffinöl und erhält nach erneuter Destillation 33 g 1,1,2-Ethantrisphosphonsäurehexaethylester vom Kp 194-196° bei 0,4 mbar Ausbeute : 23 %. ($^{31}P\{^1H\}$NMR zeigt, daß die Primärausbeute weitaus größer ist.)

Beispiel 4

1,1,2,2-Ethantetrakisphosphonsäureoktaethylester aus Tetrachlorethylen, 1,1,2,2-Ethantetrakisphosphonsäure

Apparatur : 2 Liter Dreihalskolben, KPG-Rührer, Rückflußkühler, Tropftrichter, Stickstoffschutzgas.

Zu einer Suspension von 30 g Natriumhydridpaste (MERCK, 80 % NaH in Paraffinöl) in 200 ml trockenem Tetrahydrofuran tropft man eine Lösung von 138 g (1 Mol) Diethylphosphit in 200 ml abs. THF. Nachdem die Wasserstoffentwicklung bei Raumtemperatur beendet ist, erwärmt man 1 Stunde lang zum Rückfluß, wobei eine klare Lösung von Diethylphosphitnatrium resultiert. Hierzu tropft man unter Eiskühlung eine Lösung von 66 g (0.4 Mol) Tetrachlorethylen in 80 ml abs. THF innerhalb von 45 Minuten, wobei ein feinteiliger Niederschlag entsteht. Nach beendeter Zugabe wird auf Raumtemperatur gebracht und die entstandene Suspension 1 Stunde lang kräftig nachgerührt. Anschließend tropft man eine Lösung von 30 g Wasser in 80 ml THF langsam unter intensivem Rühren hinzu, wobei eine intensive Rotfärbung eintritt. Mit einer Lösung von Eisessig/THF (1 : 1) wird nun auf pH 7 eingestellt, wobei die rote Färbung verschwindet. Den gesamten Ansatz engt man nun am Rotationsverdampfer ein, nimmt den Rückstand in Methylenchlorid auf und entfernt das gebildete NaCl durch Auswaschen mit Wasser. Die Methylenchloridphase wird abgetrennt, über Natriumsulfat getrocknet und dann am Rotationsverdampfer erneut eingeengt. Der ölige Rückstand wird nun mit 125 ml 36 % HCl 3 Stunden lang zum Rückfluß erwärmt. Nach Abziehen der überschüssigen Salzsäure verbleibt ein braunes, zähes Öl, auf dessen Oberfläche sich alsbald das aus der Natriumhydridpaste stammende Paraffinöl abscheidet. Durch Ausschütteln mit Ligroin 30-50 entfernt man das Paraffinöl. Der zähölige Rückstand besteht nahezu quantitativ aus 1,1,2,2-Ethantetrakisphosphonsäure, wie $^{13}P\{^1H\}$NMR zeigt. Ausbeute der Reinsäure : 34,3 %.

Beispiel 5

1,1,2-Ethantrisphosphonsäurehexaisopropylester aus Vinylidenchlorid

Apparatur : 4 Liter Dreihalskolben, KPG-Rührer, Tropftrichter, Rückflußkühler, Stickstoffschutzgas.

Zu einer Suspension von 90 g Natriumhydridpaste (MERCK, 80 % NaH in Paraffinöl) (3 Mol) in 2 000 ml trockenem Tetrahydrofuran tropft man bei Raumtemperatur eine Lösung aus 498 g (3 Mol) Diisopropylphosphit in 1 000 ml abs. THF. Nach beendeter Wasserstoffentwicklung wird 1 Stunde lang zum Rückfluß erwärmt und über Nacht bei Raumtemperatur belassen. Nun fügt man direkt eine Lösung von 97 g (1 Mol) Vinylidenchlorid in 250 ml abs. THF hinzu und erwärmt zum Rückfluß. Für intensive Kühlung des Rückflußkühlers ist Sorge zu tragen ! Nach insgesamt 6 Stunden Rückflußzeit wird der gesamte Ansatz mit Eisessig/THF (1 : 1) auf pH 7 gebracht und am Rotationsverdampfer eingeengt. Der ölige Rückstand wird in 1 000 ml Methylenchlorid aufgenommen und anschließend mit 1 000 ml Wasser das gebildete Kochsalz ausgewaschen. Nach Abtrennen und Tocknen der Methylenchloridphase über Natriumsulfat wird am Rotationsverdampfer eingeengt. Der entstandene Rohester wird einer Dünnschichtverdampfung mit dem Leybold-Heraueus KDL-1 unterworfen. Man erhält 210 g (43 %) eines farblosen Esters von Kp 220° bei 0,03 mbar. Für rasche Destillation ist zu sorgen. Langsame Destillation führt zur Pyrolyse, wobei als fester Rückstand die 1,1,2-Ethantrisphosphonsäure hinterbleibt.

Beispiel 6

1,1,2,2-Ethantetrakisphosphonsäure-oktaisopropylester aus Trichlorethylen

Apparatur : 2 Liter Dreihalskolben, KPG-Rührer, Tropftrichter, Rückflußkühler, Stickstoffschutzgas.

1. 0,5 molare Lösung von Diisopropylphosphitnatrium :

Zu einer Suspension von 30 g Natriumhydridpaste (MERCK, 80 % NaH in Paraffinöl) (1 Mol) in 500 ml trockenem Tetrahydrofuran tropft man bei Raumtemperatur innerhalb von 2 Stunden eine Lösung aus 166 g (1 Mol) Diisopropylphosphit in 250 ml abs. THF. Nach Ende der Wasserstoffentwicklung wird 30 Minuten lang zum Rückfluß erwärmt, dann abgekühlt und in einem 2 Liter Messkolben wird die Diisopropylphosphitnatriumlösung mit abs. THF aufgefüllt.

2. Umsetzung mit Trichlorethylen :

In einem 500 ml Dreihalskolben werden 6,5 g (0.05 Mol) Trichlorethylen und 50 ml abs. THF vorgelegt. Bei Raumtemperatur tropft man hierzu 400 ml der 0,5 m Diisopropylphosphitnatriumlösung innerhalb 1 Stunde zu. Dann wird 4 Stunden lang zum Rückfluß erwärmt, über Nacht bei Raumtemperatur belassen und anschließend mit Eissessig/THF (1 : 1) auf pH 7 eingestellt. Der gesamte Ansatz wird am Rotationsverdampfer eingeengt und erneut mit 500 ml Toluol aufgenommen. Durch Auswaschen mit Wasser entfernt man das gebildete NaCl, trennt die Toluolphase ab, trocknet über Natriumsulfat und engt am Rotationsverdampfer ein. Der verbleibende Rückstand, ein schwach gelb gefärbtes 01, ist nach NMR-Befunden praktisch reiner 1,1,2,2-Ethantetrakis-oktaisopropylester, nicht destillierbar. Ausbeute : prakt. quantitativ.

## Beispiel 7

1,1,2,2-Ethantetrakisphosphonsäureoktaisopropylester aus Tetrachlorethylen

Es wird wie in Beispiel 6 gearbeitet, jedoch mit folgender Abwandlung :

Vorlage : 8,3 g (0.05 Mol) Tetrachlorethylen 50 ml abs. THF
Zugabe : 400 ml 0.5 m Diisopropylphosphitnatriumlösung in THF.

Die Aufarbeitung erfolgt wie in Beispiel 6
Ergebnis : Nach $^{31}$p $^{1}$H NMR Befunden nahezu quantitativer Umsatz zum nicht-destillierbaren öligen 1,1,2,2-Ethantetrakis-oktaisopropylester.

Diisooktylphosphit reagiert zwar langsamer, prinzipiell aber ähnlich dem Diisopropylphosphit. Es wird ein zäher nicht destillierbarer 1,1,2,2-Ethantetrakisphosphonsäure-oktaisooktylester durch entsprechende Umsetzung mit Tetrachlorethylen erhalten.

## Beispiel 8

1,1,2,2-Ethan-tetrakis-(P-methyl)-phosphinsäure aus Trichlorethylen

Analog zur Darstellung von Diethylphosphitnatrium (vergleiche Beispiel 1) erfolgt zunächst die Darstellung von Methanphosphonigsäure-isobutylesternatriumsalz (MOISIBNa) :

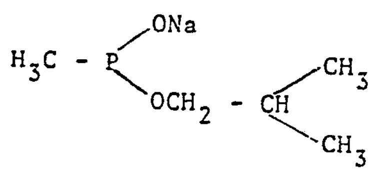

In einem 2 Liter Dreihalskolben legt man unter $N_2$-Schutzgas 60 g einer NaH-Paste (Merck, 80 %), entsprechend 2 Mol NaH, in 500 ml THF abs. vor. Unter Rühren tropft man langsam eine Lösung von 272 g (2 Mol) Methanphosphonigsäureisobutylester (MOISIB) in 1 Liter THF abs. zu. Nach Ende der Zugabe wird kurz zum Rückfluß erwärmt, abgekühlt und in einem 2 Liter Maßkolben auf 2 Liter mit THF abs. aufgefüllt. Die Umsetzung verläuft quantitativ. Die Lösung wird unter Stickstoff aufbewahrt.

Es folgt die Umsetzung des so gewonnenen MOISIBNa mit Trichlorethylen zur 1,1,2,2-Ethan-tetrakis-(P-methyl)-phosphinsäure :

Vorlage : 33 g Trichlorethylen (0,25 Mol) in 250 ml THF abs.

Zugabe : 920 ml 1 m MOISIBNa-Lösung in THF unter Eiskühlung, innerhalb von 2 Stunden

Aufarbeitung : Nach beendeter Zugabe erwärmt man 1 Stunde zum Rückfluß, kühlt dann auf Raumtemperatur ab, neutralisiert mit Eisessig auf pH = 7 und engt am Rotavapor ein. Der ölige Rückstand wird mit Methylenchlorid aufgenommen und mit Wasser NaCl-frei gewaschen. Nach Einengen der über $MgSO_4$ getrockneten Phase verbleiben 139,6 g des Rohestergemisches. Ausbeute 93 %. Die Spaltung des Esters mit HCl konz. und die Isolierung der freien Säure erfolgt analog Beispiel 2 beziehungsweise Beispiel 4. Ausbeute der Reinsäure 40 % ; die Ausbeutebestimmung erfolgt NMR-spektroskopisch.

## Beispiel 9

1,1,2,2-Ethan-tetrakis-(P-methyl)-phosphinsäure aus Tetrachlorethylen

(Siehe Figur Seite 10 f.)

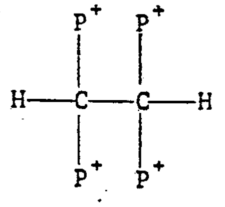

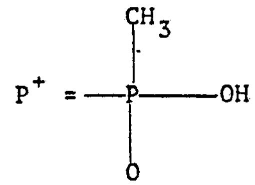

Apparatur : analog Beispiel 4.

Man legt eine Lösung von 42,2 g (0,254 Mol) Tetrachlorethylen in 250 ml abs. THF vor, kühlt in einem Eisbad ab und tropft innerhalb von zwei Stunden 1 Liter einer 1 m MOISIB-Na-Lösung zu. Man beobachtet eine spontane, exotherme Reaktion (Eiskühlung !) unter Abscheidung von NaCl und zunehmender Braunfärbung. Nach beendeter Zugabe wird eine Stunde lang zum Rückfluß erhitzt und anschließend auf Raumtemperatur abgekühlt. Mit Eisessig wird nun vorschtig auf pH = 7 eingestellt und dann die gesamte Lösung am Rotavapor eingeengt. Der braune zähölige Rückstand wird mit Methylenchlorid aufgenommen und wiederholt mit Wasser ausgewaschen. Die organische Phase wird nach Trocknen über Magnesiumsulfat erneut am Rotavapor eingeengt. Rohausbeute des Estergemisches : 125,8 g.

Zu analytischen Zwecken werden 4,5 g des Estergemisches am Kugelrohrverdampfer destilliert. Man erhält 0,9 g des Nebenproduktes Methanphosphonsäurediisobutylester sowie 3,6 g des Stereoisomerengemisches von 1,1,2,2-Ethan-tetrakis-(P-methyl)-Phosphinsäureisobutylester. Das bei 95 °C/0,07 mbar nicht destillierbare Estergemisch stellt 71,3 % Ausbeute der ersten Umsetzungsstufe dar.

86,3 g des Rohestergemisches werden mit 150 ml HCl konz. 3 Stunden lang zum Rückfluß erhitzt. Nach Einengen des Reaktionsgemisches am Rotavapor verbleichen 62,8 g eines Rohsäuregemisches, das nach NMR-Befunden zu 86,2 % aus 1,1,2,2-Ethan-(P-methyl)-tetrakisphosphinsäure besteht. Durch Zugabe von Methanol fällt man die Tetrakisphosphinsäure aus, die sich durch weiteres Waschen mit Methanol reinigen läßt. Nach Trocknen über Phosphorpentoxid verbleiben 21 g (35,6 %) der farblosen Säure. Laut P-31-NMR handelt es sich hier um ein Reinprodukt. $\delta_p$ einer 1 m Lösung in KOD = 38,8 ppm.

## Beispiel 10

1,1-2-Ethan-tris-(P-methyl)-phosphinsäure aus Vinylidenchlorid

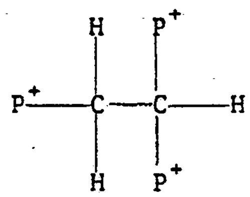

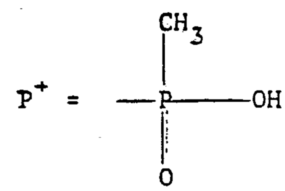

In einem 4 Liter Dreihalskolben mit Rückflußkühler, KPG-Rührer, Innenthermometer, Tropftrichter und $N_2$-Schutzgaseinlaß werden zu einer Suspension von 120 g Natriumhydridpaste (Merck, 80 %), entsprechend 4 Mol NaH, in 1 Liter THF abs. innerhalb von 2,5 Stunden 1 Liter einer 4 molaren Lösung von Methanphodphonigsäureisobutylester in THF abs. zugetropft. Anscließend wird kurz zum Rückfluß erwärmt bis eine klare Lösung resultiert.

Zu der erlakteten Lösung von MOISIBNa werden innerhalb von 3,5 Stunden – 5 °C (Eis/NaCL) 1,3 Mol) Vinylidenchlorid gelöst in 370 ml THF abs. zugetropft. Nach beendeter Zugabe wird noch 2 Stunden lang bei Raumtemperatur nachgerührt. Nach Stehen über Nacht wird mit einer 6 m Lösung von Eisessig in THF neutralisiert sowie mit 40 ml Wasser versetzt. Der dann ausgeflockte Niederschlag (NaCl) wird abfiltriert und mit THF gewaschen. Die vereinigten organischen Phasen werden nach Trocknen über Magnesiumsulfat am Rotavapor eingeengt, wobei 555 g eines Rohestergemisches verbleiben. Trennung durch Kurzwegdestillation KDL4) liefert bei 56 °C/0,013 mbar zunächst 119 g Methanphosphonsäurediisobutylester, dann bei 130 °C/0,001 3 mbar — 160 °C/0,08 mbar ein wachsartig erstarrendes farbloses Produkt : 195 g eines Isomerengemisches aus 1,1-Ethan-bis-(P-methyl)-phosphinsäureisobutylester (39 %) und 1,1,2-Ethan-tris-(P-methyl)-phosphinsäureisobutylester (61 %). Als Destillationsrückstand erhält man 240 g eines Isomerengemisches im analogen Verhältnis 14 : 86. Die als Nebenprodykt in Vorfraktion anfallende 1,2-Ethan-bis-(P-methyl)-phosphinsäure wurde durch Vergleich mit authentischen Proben identifiziert.

240 g des so erhaltenen Rückstandes werden mit 300 ml HCl konz. 5 Stunden lang zum Rückfluß erwärmt und anschließend am Rotavapor eingeengt. Umkristallisation aus Methanol/Aceton führt zur Tris-phosphinsäure, farblose Verbindung. P-31-NMR in KOD zeigt ein $AB_2$-System der Reinsubstanz bei $\delta_{PA}$ = 43,5 ppm, $\delta_{PB}$ = 39,2 ppm, $J_{AB}$ = 16 Hz. Ausbeute : 40,1 g, 39,5 %.

**Patentansprüche**

1. Verfahren zur Herstellung von Oligophosphonsäuren beziehungsweise Oligophosphinsäuren, ihren Salzen und/oder Estern durch Umsetzung von organischen Halogenverbindungen mit Diestern der Phosphorigen Säure beziehungsweise Estern von Alkyl- beziehungsweise Arylphosphonigen Säuren, dadurch gekennzeichnet, daß man

a) Olefinpolyhalogenide mit endständiger Doppelbindung und der allgemeinen Formel

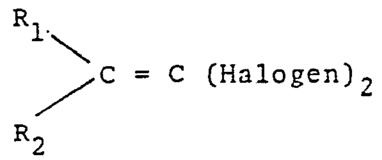

(I)

in der $R_1$ und $R_2$ gleich oder verschieden sind und Wasserstoff, Halogen oder einen Kohlenwasserstoffrest bedeuten, wobei der Kohlenwasserstoffrest gesättigt, ungesättigt oder aromatisch und dabei geradkettig, verzweigt oder ringförmig ist, eine C-Zahl bis 25, insbesondere bis 20 aufweist, gegebenenfalls auch substituiert sein kann, und Halogen Chlor und/oder Brom bedeuten,

b) mit Alkalimetallsalzen von Diestern der Phosphorigen Säure beziehungsweise von Estern Alkyl- beziehungsweise Arylphosphoniger Säuren

c) unter Austausch doppelbindungsständigen Halogens und gleichzeitiger Sättigung der Doppelbindung umsetzt,

d) wobei man in Gegenwart von unter Reaktionsbedingungen flüssigen, cyclischen oder nichtcyclischen Ethern oder tertiären Aminverbindungen als Lösungsmittel arbeitet und

e) die gebildeten Umsetzungsprodukte gewünschtenfalls zu den freien Phosphon- beziehungsweise Phosphinsäuren oder ihren Salzen verseift.

2. Verfahren nach Anspruch 1, dadurch gekennzeichnet, daß man mit Tetrahydrofuran oder Methyl-tert.-butylether als Lösungsmittel arbeitet.

3. Verfahren nach Ansprüchen 1 und 2, dadurch gekennzeichnet, daß man die phosphorhaltigen Ester- beziehungsweise Diester-alkalimetallsalze — vorzugsweise die entsprechenden Natriumsalze — im Überschuß über die zum Austausch des Halogens gegen Phosphon- beziehungsweise Phosphinsäureestergruppen stöchiometrisch benötigte Menge einsetzt, wobei vorzugsweise mit einem Überschuß von 1 Mol Alkalimettalsalz/Mol Olefinpolyhalogenid gearbeitet wird.

4. Verfahren nach Ansprüchen 1 bis 3, dadurch gekennzeichnet, daß man mit Olefinpolyhalogeniden arbeitet, in denen wenigstens einer der Reste $R_1$ und $R_2$ Wasserstoff oder Halogen bedeutet.

5. Verfahren nach Ansprüchen 1 bis 4, dadurch gekennzeichnet, daß man mit polychlorsubstituierten Olefinen arbeitet.

6. Verfahren nach Ansprüchen 1 bis 5, dadurch gekennzeichnet, daß mit Vinylidenchlorid, Trichlorethylen oder Tetrachlorethylen gearbeitet wird.

7. Verfahren nach Ansprüchen 1 bis 6, dadurch gekennzeichnet, daß man mit phosphorhaltigen Ester- beziehungsweise Diester-Alkalimetallsalzen arbeitet, die Alkylesterreste mit vorzugsweise bis zu 20 C-Atomen aufweisen, wobei die Alkylreste geradkettig oder verzweigt sein können, vorzugsweise jedoch keine tert.-Alkylreste sind.

8. Verfahren nach Ansprüchen 1 bis 7, dadurch gekennzeichnet, daß man bei Reaktionstemperaturen von − 20 bis 100 °C und wenigstens anfänglich in Abwesenheit von Feuchtigkeit und unter Inertgas arbeitet.

9. 1,1,2,2-Ethantetrakisphosphonsäure und ihre Ester der allgemeinen Formel

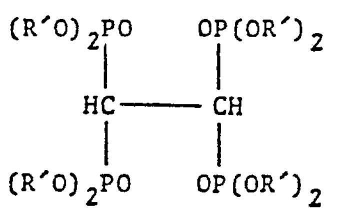

(II)

in der R′ Wasserstoff oder einen Alkylrest mit bis zu 25 C-Atomen bedeutet, sowie die wasserlöslichen Salze dieser Säure.

**Claims**

1. A process for the production of oligophosphonic acids or oligophosphinic acids, their salts and/or esters by reacting organic halogen compounds with diesters of phosphorous acid or with esters of alkyl- or aryl-phosphonous acids, characterized in that

a) olefin polyhalides containing a terminal double bond and corresponding to the following general formula

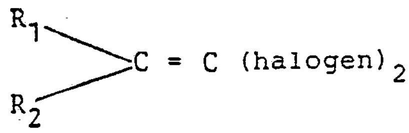

(I)

in which $R_1$ and $R_2$ may be the same or different and represent hydrogen, halogen or a hydrocarbon radical, the hydrocarbon radical being saturated, unsaturated or aromatic and linear, branched or cyclic, containing up to 25 and, more particularly, up to 20 carbon atoms and optionally being substituted, and halogen represents chlorine and/or bromine,

b) are reacted with alkali metal salts of diesters of phosphorous acid or with esters of alkyl- or aryl-phosphonous acids

c) with exchange of halogen in the double bond position and, at the same time, saturation of the double bond,

d) the reaction being carried out in the presence of cyclic or non-cyclic ethers or tertiary amine compounds liquid under the reaction conditions as solvent and

e) if desired, the reaction products formed are hydrolyzed to form the free phosphonic or phosphinic acids or their salts.

2. A process as claimed in Claim 1, characterized in that tetrahydrofuran or methyl tert-butyl ether is used as solvent.

3. A process as claimed in Claims 1 and 2, characterized in that phosphorus — containing ester or diester alkali metal salts, preferably the corresponding sodium salts, are used in an excess over and above the quantity stoichiometrically required to exchange the halogen for phosphonic or phosphinic acid ester groups an excess of 1 mole of alkali metal salt per mole of olefin polyhalide preferably being used.

4. A process as claimed in Claims 1 to 3, characterized in tha olefin polyhalides in which at least one of the radicals $R_1$ and $R_2$ is hydrogen or halogen are used.

5. A process as claimed in Claims 1 to 4, characterized in that polychlorine-substituted olefins are used.

6. A process as claimed in Claims 1 to 5, characterized in that vinylidene chloride, trichloroethylene or tetrachloroethylene is used.

7. A process as claimed in Claims 1 to 6, characterized in that the phosphorus-containing ester or diester alkali metal salts used contain alkyl ester groups preferably containing up to 20 carbon atoms, the alkyl groups being linear or branched, but are preferably not tertiary alkyl groups.

8. A process as claimed in Claims 1 to 7, characterized in that the reaction is carried out at − 20 to 100 °C and, initially at least, in the absence of moisture and in an inert gas.

9. 1,1,2,2-ethane tetrakis phosphonic acid and its esters corresponding to the following general formula

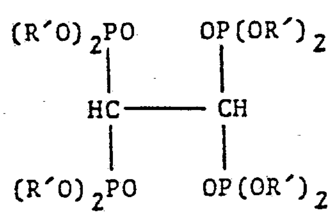

(II)

in which R′ is hydrogen or an alkyl group containing up to 25 carbon atoms, and water-soluble salts of this acid.

**Revendications**

1. Procédé de préparation d'acides oligophosphoniques ou d'acides oligophosphiniques, de leurs sels et/ou de leurs esters par réaction de composés halogénés organiques avec des diesters de l'acide phosphoreux ou avec des esters d'acides alkyl- ou aryl-phosphoneux, caractérisé en ce que :

a) on fait réagir des polyhalogénures d'oléfines comportant une double liaison terminale et répondant à la formule générale :

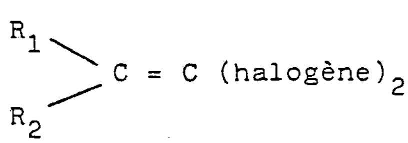

(I)

dans laquelle $R_1$ et $R_2$ sont identiques ou différents et représentent chacun un atome d'hydrogène, un atome d'halogène ou un radical d'hydrocarbure, le radical d'hydrocarbure étant saturé, insaturé ou aromatique et à chaîne droite, ramifiée ou cyclique, tandis qu'il comporte jusqu'à 25 atomes de carbone, en particulier, jusqu'à 20 atomes de carbone et qu'il peut éventuellement être également substitué, tandis que l'atome d'halogène est le chlore et/ou le brome,

b) avec des sels de métaux alcalins de diesters de l'acide phosphoreux ou d'esters d'acides alkyl- ou aryl-phosphoneux,

c) avec échange de l'atome d'halogène se trouvant sur la double liaison et saturation simultanée de la double liaison,

d) en travaillant en présence de composés d'amines tertiaires ou d'éthers cycliques ou non cycliques liquides dans les conditions réactionnelles, comme solvants, et

e) en saponifiant, si on le désire, les produits réactionnels formés en acides phosphonique ou en acides phosphiniques libres ou leurs sels.

2. Procédé selon la revendication 1, caractérisé en ce qu'on travaille avec le tétrahydrofuranne ou l'éther méthyl-tert-butylique comme solvant.

3. Procédé selon les revendications 1 et 2, caractérisé en ce qu'on utilise des sels de métaux alcalins d'esters ou de diesters contenant du phosphore, de préférence, les sels de sodium correspondants, en excès vis-à-vis de la quantité stœchiométriquement nécessaire pour l'échange de l'halogène contre des groupes d'esters d'acides phosphoniques ou d'acides phosphiniques en travaillant, de préférence, avec un excès de 1 mole de sel de métal alcalin/mole de polyhalogénure d'oléfine.

4. Procédé selon les revendications 1 à 3, caractérisé en ce qu'on travaille avec des polyhalogénures d'oléfines dans lesquels au moins un des radicaux $R_1$ et $R_2$ représente l'hydrogène ou un halogène.

5. Procédé selon les revendications 1 à 4, caractérisé en ce qu'on travaille avec des oléfines polychloro-substituées.

6. Procédé selon les revendications 1 à 5, caractérisé en ce qu'on travaille avec le chlorure de vinylidène, le trichloréthylène ou le tétrachloréthylène.

7. Procédé selon les revendications 1 à 6, caractérisé en ce qu'on travaille avec des sels de métaux alcalins d'esters ou de diesters contenant du phosphore et comportant des radicaux d'esters alkyliques contenant, de préférence, jusqu'à 20 atomes de carbone, les radicaux alkyle pouvant être à chaîne droite ou ramifiée, cependant que, de préférence, ils ne sont pas des radicaux tert-alkyle.

8. Procédé selon les revendications 1 à 7, caractérisé en ce qu'on travaille à des températures réactionnelles de − 20 à 100 °C et, du moins au début, en absence d'humidité et sous une atmosphère d'un gaz inerte.

9. L'acide 1,1,2,2-éthane-tétrakis-phosphonique et ses esters, répondant à la formule générale :

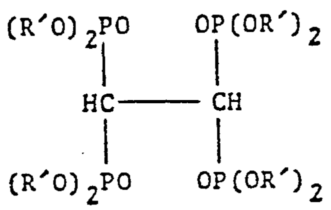

(II)

dans laquelle R' représente un atome d'hydrogène ou un radical alkyle contenant jusqu'à 25 atomes de carbone, de même que les sels hydrosolubles de cet acide.